## Europäisches Patentamt

## European Patent Office

## Office européen des brevets

(19)

(11) Veröffentlichungsnummer : **0 103 908**
**B1**

(12) **EUROPÄISCHE PATENTSCHRIFT**

(45) Veröffentlichungstag der Patentschrift :
11.12.85

(21) Anmeldenummer : 83200859.3

(22) Anmeldetag : 14.06.83

(51) Int. Cl.⁴ : **C 08 G 59/18,** C 08 G 59/40,
C 08 G 59/42, C 08 G 59/62,
C 08 L 63/00, C 04 B 26/14,
C 09 D 3/00, E 21 D 20/02

(54) **Mit Wasser emulgierbare Epoxidharzsysteme und daraus hergestellte wässrige Emulsion sowie Verfahren zu ihrer Herstellung und Verwendung.**

(30) Priorität : 26.08.82 DE 3231730
31.05.83 DE 3319675

(43) Veröffentlichungstag der Anmeldung :
28.03.84 Patentblatt 84/13

(45) Bekanntmachung des Hinweises auf die Patenterteilung : 11.12.85 Patentblatt 85/50

(84) Benannte Vertragsstaaten :
AT BE CH DE FR GB IT LI LU NL SE

(56) Entgegenhaltungen :
BE-A- 660 982
DE-A- 1 912 485
Patent Abstracts of Japan Band 2, Nr. 85, 12. Juli 1975 Seite 1230C78
Patent Abstracts of Japan Band 6, Nr. 68, 30. April 1982
Patent Abstracts of Japan Band 3, Nr. 138, 16. November 1979 Seite 11C64

(73) Patentinhaber : **Rütgerswerke Aktiengesellschaft
Mainzer Landstrasse 217
D-6000 Frankfurt a.Main 1 (DE)**

(72) Erfinder : **Conrad, Karl-Hermann, Dipl.-Ing.
Rudolfstrasse 10
D-4130 Moers 2 (DE)**
Erfinder : **Herzog, Rolf, Dr.
Beethovenstrasse 14
D-4250 Bottrop (DE)**
Erfinder : **Klein, Hans
Heideweg 1
D-4152 Kempen 1 - St. Hubert (DE)**
Erfinder : **Meier, Bert, Dr. Ing.
Zedernweg 89
D-4230 Wesel-Blumenkamp (DE)**
**Der weitere Erfinder hat auf seine Nennug verzichtet**

Jouve, 18, rue St-Denis, 75001 Paris, France

**Beschreibung**

Die Erfindung betrifft neue, mit Wasser emulgierbare Epoxidharzsysteme, daraus hergestellte wäßrige Emulsionen und ihre Verwendung zur Herstellung von epoxidharzvergüteten Baustoffen.

Es ist bekannt, hydraulische Bindemittel wie z. B. Gips, Anhydrit, Kalk, Zement oder auch Mischungen dieser Stoffe mit wäßrigen Emulsionen oder Suspensionen von thermoplastischen oder duroplastischen Kunststoffen zu kombinieren und dadurch Baustoffe mit verbesserten Eigenschaften herzustellen.

Aus DE-PS 1 159 839 und DE-OS 1 595 467 sind entsprechende Epoxidharzemulsionen und -dispersionen für diesen Anwendungsbereich bekannt. Als Härter dienen dabei Polyamine, Polyimidazoline oder Polyaminoamide.

Wie sich aus DE-OS 1 595 467 ergibt, ist es notwendig, die Epoxidharz-Härter-Dispersionen durch Zugabe von Tensiden oder Glykolen zu stabilisieren. Dadurch wird unter Umständen die Haftung am Untergrund und die innere Festigkeit der damit hergestellten Bauteile reduziert, bzw. die an und für sich dem Epoxidharz eigene Tendenz verstärkt, in einer Mischung mit hydraulischem Bindemittel separat zu härten.

Man erhält zwar vergütete Baustoffe, jedoch werden die erzielten Verbesserungen allgemein noch nicht als ausreichend angesehen, zumal andere Eigenschaften wie die Frost- und Tausalzbeständigkeit daraus hergestellter Bauteile nicht zufriedenstellend sind.

Der Hauptgrund hierfür liegt darin, daß die Verteilung der Harzsubstanz in der Zementsteinstruktur zu nachteiligen inneren Spannungen führt. Insbesondere liegen kugelförmige und filmartige Harzagglomerationen vor, die den inneren Kraftfluß stören und die Verzahnung der Zementhydrat-Neubildungen beeinträchtigen. Außerdem weisen die so erhaltenen Mörtel nur dann ausreichende Fließfähigkeiten (gemessen am sogenannten Ausbreitmaß nach DIN 1045 und 1164) auf, wenn sie unwirtschaftlich hohe Epoxidharzanteile enthalten. Daher haben epoxidharzvergütete Baustoffe keine allzu weitverbreitete Anwendungsbasis gefunden, obwohl gerade die Epoxidharze als hochwertige Kunststoffe mit hervorragenden Klebe- und Festigkeitseigenschaften bekannt sind.

Es bestand die Aufgabe, mit Wasser emulgierbare Epoxidharzsysteme und daraus hergestellte wäßrige Emulsionen zu finden, die möglichst ohne Netzmittel oder Dispergierhilfe ausreichend stabil sind, und die im Gemisch mit hydraulischen Bindemitteln und Zuschlagstoffen in möglichst geringen Zusätzen eine stark verbesserte Festigkeit und Beständigkeit der daraus hergestellten Bauteile bewirken.

Hierzu müssen die Harzanteile im Zementstein extrem fein verteilt vorliegen, wobei gleichzeitig eine innige Anlagerung an die Zementhydrate erfolgen muß. Hierzu ist eine Abstimmung der Oberflächenspannungen von Harz und Zement erforderlich. Außerdem sollen diese Mörtelmassen über ein höhes Ausbreitmaß und gute Verarbeitungsfähigkeit verfügen. Die ausgehärteten Baustoffe sollen überdies einen geringen Luftporengehalt aufweisen.

Die Lösung der Aufgabe erfolgt dadurch, daß die Härterkomponente

a) 65-99 Gew.-% eines Adduktes aus 35-94 Gew.-%, bezogen auf die Gesamthärterkomponente, Polyamin, Polyaminoimidazolin und/oder Polyaminoamid und 5-30 Gew.%, bezogen auf die Gesamthärterkomponente einer oder mehrere Glycidylverbindungen,

b) 0,1-5 Gew.-% einer oder mehrerer aliphatischer oder aromatischer Carbonsäuren und

c) 0,9-30 Gew.-% eines phenol-modifizierten aromatischen Kohlenwasserstoffharzes mit einem Gehalt an OH-Gruppen von 0,9-6 % enthält.

Die Herstellung der Härterkomponente erfolgt in der Weise, daß 35-94 Gew.-% Polyamin, Polyaminoimidazol und/oder Polyaminoamid und 5-30 Gew.-% einer oder mehrerer Diglycidylverbindungen bei Temperaturen im Bereich von 60 bis 100 °C während mehrerer Stunden zur Reaktion gebracht werden und das entstandene Addukt mit 0,1-5 Gew.-% Carbonsäure und 0,9-30 Gew.-% eines phenol-modifizierten aromatischen Kohlenwasserstoffharzes mit einem Gehalt an OH-Gruppen von 0,9-6 % gemischt wird. Andererseits kann auch die Carbonsäure vor der Adduktbildung mit der Polyaminoverbindung gemischt werden.

Diese Härterkomponente wird in Wasser gelöst oder emulgiert und mit der entsprechenden Menge Epoxidharz unter intensivem Rühren ohne Zusatz eines Tensids oder eines sonstigen Emulgier- oder Dispergierhilfsstoffs vermischt. Die so hergestellte wäßrige Emulsion hat je nach Einstellung eine Topfzeit von etwa 0,5-8 h und kann innerhalb dieser Zeit mit hydraulischen Bindemitteln und gegebenenfalls Füllstoffen und Zuschlagstoffen gemischt werden. Diese Zugabe zu den hydraulischen Bindemitteln kann so erfolgen, daß man die Epoxidharz/Härteremulsion der fertigen, mit Wasser angeteigten Baustoffmischung zuschlägt oder aber die Epoxidharzhärteremulsion vorab mit dem Anmachwasser vermischt und dann erst die Bindemittel und Zuschlagstoffe zugibt.

Eine weitere vereinfachte Ausführungsform besteht darin, die wasserhaltige oder wasserfreie Härterkomponente im Anmachwasser des hydraulischen Bindemittels zu lösen oder zu emulgieren, danach die Harzkomponente zuzugeben und zu emulgieren und dann Bindemittel, Zuschlagstoffe und eventuell Restwasser unterzumischen.

Die so hergestellten vergüteten Baustoffe härten dann zu Bauteilen, die auch bei Verwendung geringerer Mengen an erfindungsgemäßer Epoxidharzemulsion weitgehend porenfrei sind und ausgezeichnete Festigkeiten, gute Frost- und Tausalzbeständigkeit und gute Haftung auf dem jeweiligen Untergrund zeigen. Darüber hinaus wurde überraschenderweise gefunden, daß z. B. so hergestellte Betonproben auch nach langer Freilandlagerung mit dem Phenolphthalein-Test (vergl. Wesche, Beton 2, Abschnitt 3.3.7.1., Seite 79, Bauverlag Wiesbaden — Berlin, Ausgabe 1981) keine meßbare Tendenz zum Carbonatisieren in der Tiefe zeigen.

Somit bleibt die passivierende Wirkung des alkalisch reagierenden Zementsteins auf eingebettete metallische Bewehrungselemente über sehr lange Zeiträume hinweg erhalten, länger als das beim normalen, unmodifizierten Beton bekannt ist. Das bedeutet bei eingebauten Betonstählen eine hohe Stabilität auch gegen Korrosion. In dieser Eigenschaft übertrifft der neue Mörtel z. B. diejenigen mit thermoplastischen Polymeren bei weitem.

Hervorzuheben ist weiterhin der verflüssigende Effekt des erfindungsgemäßen Epoxidharz-Härter-Systems im Frischmörtel, charakterisiert durch ein hohes Ausbreitmaß nach DIN 1045 und 1164, was in der Praxis unter anderem eine verbesserte Pumpfähigkeit und verbesserte Verarbeitbarkeit bedeutet. Bei den ausgehärteten Baustoffen ist eine hohe Stabilität gegen Rißbildungen im Mikrometerbereich hervorzuheben. So zeigen Baustoffe im Sinne der vorliegenden Erfindung auch bei sehr hohem Wasser-Zement-Faktor eine drastisch verringerte Anfälligkeit zur Mikrorißbildung. Darüberhinaus bedingen die erfindungsgemäßen Epoxidharz-Härter-Mischungen einen geringen Porengehalt des Mörtels, auch bei Überschreiten einer vorgeschriebenen Wassermenge.

Als Mono- und polyfunktionelle Epoxidharzkomponente lassen sich alle handelsüblichen Glycidylverbindungen einsetzen. Eine umfangreiche Aufzählung derartiger Glycidylverbindungen findet sich im « Handbook of Epoxy Resins » von Lee u. Neville, Mc Graw-Hill Inc., 1967.

Soweit mono- oder polyfunktionnelle niedrigviskose Glycidylverbindungen betroffen sind, werden sie z. B. von M. Pilny und Mleziva in Kunststoffe 67 (1977), 783-790 beschrieben. Diese sogenannten Reaktiv-Verdünner dienen zur Senkung der Verarbeitungsviskosität in der Kombination mit höhermolekularen Epoxidharzen.

Bevorzugt werden Glycidylverbindungen auf Basis Bisphenol-A und F mit Epoxidäquivalenten von 175-500.

Besonders bevorzugt werden Mischungen der zuletzt genannten Glycidylverbindungen mit mono- und difunktionellen Reaktiv-Verdünnern.

Die erfindungsgemäße Härterkomponente ist ein Gemisch aus drei unterschiedlichen Produktgruppen, einem Addukt aus einer Polyoaminoamid-, Polyaminoimidazolin- oder Polyaminoverbindung mit einer oder mehreren Glycidylverbindungen, einer oder mehreren Carbonsäuren und einem hydroxylgruppenhaltigen, aromatischen Kohlenwasserstoffharz.

Addukte aus Glycidylverbindungen und Polyaminoverbindungen als Härter für Epoxidharze sind ebenfalls im « Handbook of Epoxy-Resins » beschrieben. Für die erfindungsgemäßen Addukte können als Glycidylverbindungen alle handelsüblichen Glycidylverbindungen mit einer oder mehr als einer Epoxidgruppe im Molekült verwendet werden. Als Polyaminoverbindungen können sowohl Polyamine und Polyaminoamide oder Polyaminoimidazole alleine oder im Gemisch miteinander eingesetzt werden. Beispiele für typische Polyamine können z. B. sein Diäthylentriamin, Triäthylentetramin, Pentamethylenhexamin, Iminobispropylamin, Dimethylaminopropylamin, Aminoäthyläthanolamin.

Die erfindungsgemäß verwendeten Polyaminoamide sind bekannte Umsetzungsprodukte von Polyaminen mit gesättigten, bevorzugt aber einfach oder mehrfach ungesättigten Fettsäuren. Beispiele für die in natürlichen Ölen, wie Leinöl, Tallöl oder Ricinusöl, als Fettsäurederivate vorkommenden mehrfach ungesättigten Fettsäuren sind 9.11-Octadecadien, 9.12-Octadecadien, Linol-, Linolen-, α-Eläostearin- und β-Eläostearinsäure. Selbstverständlich können auch entsprechende und ähnliche synthetische Fettsäuren als Ausgangsmaterial dienen. Die Fettsäuren können als Amidbestandteil einzeln oder als Gemisch eingesetzt werden. Aus wirtschaftlichen Gründen werden bevorzugt die im Handel erhältlichen Gemische derartiger Säuren eingesetzt, die sowohl ungesättigte als auch gesättigte Fettsäuren wie z. B. die Öl-, Stearin- oder Palmitinsäure enthalten.

Die Aminkomponenten der Polyaminoamide stellen Amine dar mit wenigstens einer primären und wenigstens einer sekundären Aminogruppe. Diese Amine können auch eine OH-Gruppe enthalten. Beispiele derartiger Verbindungen sind : Diäthylentriamin, Triäthylentetramin, Tetraäthylenpentamin, Methyl-, aminopropylamin, Tetrapropylenpentamin, Pentaäthylenhexamin, N,N'-Bis-(3-aminopropyl)-äthylendiamin, N-(2-Aminoäthyl)-aminopropylamin, 3-Amino-1-methylaminopropan, 3-Amino-1-cyclohexylaminopropan, N-Oleyl-1,3-diaminopropan, N-Dodecyl-1,3-diaminopropan, N-Cetyl-1,3-diaminopropan, 1-(2-Aminoäthyl)-piperazin, N-(2-Hydroxyäthyl)-amino-äthylamin.

Eine spezielle Gruppe von Polyaminen, die zur Herstellung der erfindungsgemäß verwendeten Addukte eingesetzt werden kann, stellen die Polyaminoimidazole dar, die, ähnlich wie die Polyaminoamide durch Umsetzung von Polyaminen mit Fettsäuren, jedoch bei höheren Temperaturen hergestellt werden. Auch diese Imidazolinverbindungen sind als Härtungsmittel für Epoxidharze bekannt, und es können für die erfindungsgemäße Adduktbildung beliebige handelsübliche Polyaminoimidazoline verwendet werden.

Die Addukte werden hergestellt durch mehrstündige Umsetzung von 35-94 Gew.-% der gewählten Polyaminoverbindung mit 5-30 Gew.-% einer oder mehrerer Glycidylverbindungen bei Temperaturen im Bereich von 60 bis 100 °C, wobei die Menge der Glycidylverbindung molar im Unterschuß bezüglich der reaktiven Aminogruppen vorhanden ist, so daß das Addukt in jedem Fall freie Aminogruppen enthält.

Als zweiter Bestandteil der erfindungsgemäßen Härterkomponente dienen 0,1 bis 0,5 Gew.-% einer oder mehrerer aliphatischer oder aromatischer Carbonsäuren. Als Carbonsäuren können sowohl substituierte als auch unsubstituierte aliphatische, cycloaliphatische oder aromatische Mono-, Di- oder Tricarbonsäuren mit 1 Bis 8 Kohlenwasserstoffatomen verwendet werden. Bespiele für geeignete Carbonsäuren sind Ameisen-, Essig-, Propion-, Oxal-, Malon-, Bernstein-, Glutar-, Adipin-, Malein-, Trimethylessig-, Chloressig-, Chlorpropion-, Glykol-, Milch-, Vinylessig-, Wein-, Citronen-, Benzoe-, Phenylessig-, Phthal-, Tetrahydrophthal- oder Hexahydrophthalsäure, die einzeln oder im Gemisch eingesetzt werden.

Der dritte Bestandteil der Härterkomponente ist ein hydroxylgruppenhaltiges, aromatisches Kohlenwasserstoffharz, das in einer Menge von 0,9-30 Gew.-%, bevorzugt in einer Menge von 10-30 %, bezogen auf den Gesamthärter, eingesetzt wird.

Aromatische Kohlenwasserstoffharze werden hergestellt durch katalytische Polymerisation von vorwiegend aromatischen ungesättigten Kohlenwasserstoffen aus entweder den im Temperaturbereich von 140 bis etwa 220 °C siedenden Destillaten aus dem Steinkohlenhochtemperaturteer, oder den bei der Crackung von Naphtha oder Gasöl sowie bei der Pyrolyse von Crackrückständen entstehenden und im Bereich von 160-220 °C siedenden Fraktion, der sogenannten Harzölfraktion.

Diese Fraktionen enthalten als ungesättigte aromatische Verbindungen im wesentlichen Inden, Vinyltoluol, Methylinden, Cumaron, Dicyclopentadien, Methyldicyclopentadien, Styrol und α-Methylstyrol.

Durch Copolymerisation mit phenolischen Verbindungen wie Phenol, dessen alkyl-substituierten Homologen oder mehrwertigen Phenolen erhalten die Harze OH-Gruppen und dadurch zusätzlich polare und hydrophile Eigenschaften. Durch die Menge der einpolymerisierten phenolischen Gruppen lassen sich gezielt bestimmte OH-Zahlen der modifizierten Kohlenwasserstofharze einstellen. Verwendet werden können phenolmodifizierte aromatische Kohlenwasserstoffharze mit einem OH-Gehalt von 0,9-6 %, bevorzugt mit einem OH-Gehalt von 1,5-3 %.

Obwohl die Carbonsäure der Polyaminoverbindung auch bereits vor der Adduktbildungsreaktion zugegeben werden kann, werden in der bevorzugten Ausführung die Bestandteile 2 und 3 der Härterkomponente dem Addukt aus Glycidylverbindung und Polyaminoverbindung direkt nach dessen Herstellung zugemischt. Die entstehenden Härter sind lagerstabile hochviskose Produkte, die sich entweder in Wasser lösen oder leicht darin emulgierbar sind, wobei auch die entsprechenden Emulsionen lagerstabil sind. Daher kann die Härterkomponente entweder als unverdünntes Produkt oder als wäßrige Lösung oder Emulsion in den Handel gebracht werden. Bei Gebrauch wird auch das unverdünnte Produkt in Wasser gelöst oder emulgiert danach mit der flüssigen Epoxidharzkomponente versetzt und emulgiert. Dabei werden vorzugsweise Härtungsmittel und Epoxidharz in etwa äquivalenten Mengen, bezogen auf aktive Aminwasserstoffatome und reaktive Epoxidgruppen eingesetzt. Es ist aber auch möglich, Härtungs- und Epoxidharzkomponente im Ober- bzw. Unterschuß zu verwenden. Die entstehenden Emulsionen sind auch ohne Emulgier- oder Dispergiermittel soweit stabil, daß auch bei Zugabe von hydraulischen Bindemitteln, Hilfs- und Zuschlagstoffen kein Brechen der Emulsion auftritt.

Aufgrund der geschilderten Eigenschaften der erfindungsgemäßen, emulgierbaren Epoxidharzsysteme und der mit ihnen vergüteten hydraulischen Bindemittel ergeben sich mit diesen Epoxidharzsystemen in Kombination mit hydraulischen Bindemitteln, Füll- u./o. Zuschlagstoffen vorteilhafte Problemlösungen in verschiedenen technischen Bereichen wie z. B. zur Beschichtung von Metallrohren zur Herstellung von halbstarren Belägen, von Einpreßmörteln oder von Gebirgsankern.

Metallrohre, insbesondere Stahl- oder Gußeisenrohre, die in der Erde oder unter Wasser verlegt werden, benötigen normalerweise innen und außen einen zuverlässigen Korrosionsschutz. Hier werden für den Innenschutz vorwiegend eine Betonauskleidung und für den Außenschutz eine Betonbeschichtung oder ein Anstrich mit Bitumen, einem Lack oder einem Kunststoff eingesetzt.

Die Außenbeschichtungen mit Lacken, Kunststoffen oder Bitumen-anstrichen sind relativ empfindlich gegen mechanische Beschädigungen und auch die übliche Betonbeschichtung hat verschiedene Nachteile. So ist Beton z. B. nicht gegen jedes Wasser beständig. Saures, chlorid-, sulfid- oder sulfathaltiges, aber auch weiches Wasser kann Beton angreifen. Durch Reaktion mit kohlendioxid, die sog. Carbonatisierung, wird die Alkalireserve des Betons aufgezehrt, und so seine korrosionsschützende Eigenschaft abgebaut. Dies ist besonders wichtig bei Rohren, die nicht immer voll gefüllt sind.

Beim Erhärten des Betons, aber auch beim Verlegen der Rohre sowie bei verlegten Rohren durch Erdbewegungen können Risse auftreten, die das korrodierende Wasser bis an das Eisenrohr leiten. Hierdurch entstehen besonders in Wasserwechselzonen sehr leicht Schäden.

Die Reparatur von Altbeton mit frischem Mörtel ist nicht einfach und es bedarf zur Erzielung eines ausreichenden Verbundes der Verwendung eines Haftvermittlers.

Bei der Außenbeschichtung ergibt sich sehr leicht ein Bruch der Betonschicht bei mechanischer Beanspruchung. Außerdem ist hier die Gefahr des Angriffs von Kohlensäure oft verstärkt. Gerade wegen dieser Carbonatisierung des Betons werden eiserne Rohre, die über der Erde verlegt werden, außen nicht mit Beton beschichtet.

Man kennt zwar für verschiedene Probleme Lösungen wie z. B. die Bewehrung des Betons für die Außenbeschichtung mit Stahl oder mit Fasern, die zeitliche Begrenzung der Freiluftlagerung von

4

beschichteten Rohren oder auch die Vergütung des Betons mit Kunstharzen wie Thermoplasten, aber auch Epoxidharzen.

Durch diese Vergütung wird die Beständigkeit des Betons gerade gegen aggressives Wasser erhöht und auch die Rißbildung vermindert, jedoch werden die durch Carbonatisierungsreaktionen des Betons bedingten Gefahren nicht reduziert.

Demgegenüber wurde gefunden, daß sich Mörtel, die die erfindungsgemäßen Epoxidharzemulsionen enthalten, aufgrund ihrer Eigenschaften ausgezeichnet für die Innen- und Außenbeschichtung von Metallrohren, insbesondere von Stahl- und Gußrohren eignen und daß die daraus resultierenden Betonbeschichtungen keine der beschriebenen Nachteile aufweisen.

Ein derartiger Zementmörtel härtet zu einem Beton, der auch bei Verwendung geringer Mengen an erfindungsgemäßer Epoxidharzemulsion eine gute Haftung auf altem Beton und auf metallischem Untergrund zeigt, der weitgehend porenfrei ist und der daher ausgezeichnete Festigkeiten hat. Zur Steigerung dieser Festigkeiten, z. B. für eine Außenbeschichtung, können derartigen Mörteln noch verstärkende Fasermaterialien wie etwa organische Fasern oder alkaliresistente Glasfasern beigemischt werden. Um den Verbund zwischen Glasfaser und der Epoxidkomponente zu erhöhen, empfiehlt sich dann eine zusätzliche Zugabe geringer Mengen (0,5-1 %, bezogen auf die Gesamthärterkomponente) eines epoximodifizierten Silans.

Darüber hinaus wurde gefunden, daß z. B. so hergestellte Betonproben auch nach langer Freilandlagerung mit dem Phenolphthalein-Test (vergl. Wesche, Beton 2, Abschnitt 3.3.7.1., Seite 79, Bauverlag Wiesbaden — Berlin, Ausgabe 1981) keine meßbare Tendenz zum Carbonatisieren in der Tiefe zeigen.

Somit bleibt die passivierende Wirkung des alkalisch reagierenden Zementsteins auf eingebettete metallische Elemente über sehr lange Zeiträume hinweg erhalten, länger als das beim normalen, unmodifizierten Beton bekannt ist. Das bedeutet bei beschichteten Metallrohren eine hohe Stabilität auch gegen Korrosion. In dieser Eigenschaft übertrifft der neue Mörtel auch die mit bekannten Polymeren modifizierten Betonarten bei weitem.

Günstig ist weiterhin der verflüssigende Effekt des erfindungsgemäßen Epoxidharz-Härter-Systems im Frischmörtel, charakterisiert durch ein hohes Ausbreitmaß nach DIN 1045 und 1164. Das ermöglicht das für diesen Anwendungszweck notwendige Ansetzen von Mörtelmischungen mit niedrigen Wasser-Zement-Faktoren ohne Zusatzt eines weiteren Betonverflüssigers.

Bei den ausgehärteten Baustoffen ist eine hohe Stabilität gegen Rißbildungen im Mikrometerbereich hervorzuheben. So zeigen Baustoffe im Sinne der vorliegenden Erfindung sogar bei hohem Wasser-Zement-Faktor eine drastisch verringerte Anfälligkeit zur Mikrorißbildung. Darüberhinaus bedingen die erfindungsgemäßen Epoxidharz-Härter-Mischungen einen geringen Porengehalt des Mörtels, auch bei Überschreiten einer vorgeschriebenen Wassermenge.

Durch den besonderen Aufbau der Harz- und Härterkomponente ergibt sich, daß frische Mischungen der erfindungsgemäßen Mörtels sowohl auf altem herkömmlichen Beton als auch auf altem, mit diesem Mörtel hergestellten Beton, auch ohne zusätzlichen Haftvermittler ausgezeichnet haften. Eine eventuelle Reparatur einer erfindungsgemäßen Betonbeschichtung ist daher mit dem gleichen Mörtel einfach durchführbar.

Zur Herstellung von Bahnen bei Flugplätzen, Tankstellen, Lagerhallen und ähnlichen Industrieanlagen verwendet man die sog. halbstarren Beläge nach einem aus DE-PS 1 251 358 bekannten Verfahren. Hierbei wird auf den Unterbau eine aus bituminiertem oder geteertem Splitt bestehende Splittlage aufgebracht und darauf ein Zementmörtel solcher Konsistenz verteilt, daß der Zementmörtel in der Splittlage bis in eine begrenzte Tiefe eindringen kann. Danach wird das ganze verdichtet und es entsteht ein halbstarrer Belag, der die Biegsamkeit des bituminösen Belages mit der Festigkeit des Zementbetons in sich vereinigt.

Bedingt durch den Schwindungsprozeß des erhärteten Betonmörtels zeigen sich aber hier gewisse Schwierigkeiten, die mitunter zu einer Minderung der Festigkeit und der Frost/Tauwechselbeständigkeit führen. Es wurde gefunden, daß diese Schwierigkeiten eliminiert werden, wenn dem Betonmörtel 2,5-10 Gew.-% der erfindungsgemäßen Epoxidharzemulsion zugefügt werden. Die dadurch erzielte Reduzierung der Schwindung und das Ausbleiben von Mikrorissen führen zu deutlichen Verbesserungen.

Darüberhinaus ergeben sich weitere Vorteile :

Durch die niedrige Oberflächenspannung des Mörtels ergibt sich ein besserer Verlauf. Die Zementkristallite und die Zuschlagstoffe werden zusätzlich verklebt. Der Verbund mit der mit organischem Material umhüllten Splittlage und damit die gesamten mechanischen Eigenschaften werden verbessert.

Spannglieder von vorgespannten Stahlbetonkonstruktionen werden nach dem Vorspannen mit einem Einpressmörtel verpresst, wobei alle Hohlräume des Spannkanals vollständig ausgefüllt werden müssen. An den Einpressmörtel werden sehr hohe Anforderungen hinsichtlich Schwindverhalten, Fießvermögen, Raumbeständigkeit, Druckfestigkeit und Frostbeständigkeit gestellt, die in der Praxis oft zu Problemen führen. Es wurde gefunden, daß durch Verwendung der erfindungsgemäßen Epoxidharzemulsion in Einpressmörtel diese Anforderungen in optimaler Weise erfüllt werden.

Zur Gebirgsverfestigung in Bergwerken oder bei Tunnelarbeiten werden fließfähige Massen in vorhandene Hohlräume gepreßt, die dort erhärten und die Gesteinsschichten verankern. Neben

5

**0 103 908**

derartigen Gebirgsankern, die nur auf Kunststoffbasis aufgebaut sind und die aufgrund ihrer hohen Rohstoffkosten nur in Spezialfällen zur Anwendung gelangen, werden vor allem solche auf Zementbasis eingesetzt. Auch bei diesem Anwendungsgebiet wurde gefunden, daß zementgebundene Gebirgsanker, die die erfindungsgemäßen Epoxidharzemulsionen enthalten, im Vergleich zu herkömmlichen zementgebundenen Gebirgsankern wesentliche Vorteile bieten. So bewirkt die erfindungsgemäße Epoxidharzemulsion höhere Festigkeiten, bessere Haftung am Untergrund, eine höhere Verformbarkeit und eine bessere Beständigkeit gegen aggressive Angriffe, wie z. B. kohlensäurehaltige Gebirgswasser.

Beispiel 1

Härterkomponente A

700 g eines handelsüblichen polyaminoimidazolinhaltigen Polyaminoamids (Aminäquivalent 95) werden mit 100 g eines Bisphenol-A-Diglycidyläthers mit einem Epoxidäquivalent von 190 während 2 h bei 90 °C unter Rühren umgesetzt.

Das so erhaltene Addukt wird in heißem Zustand mit 10 g Milchsäure und 190 g eines phenolmodifizierten, aromatischen Kohlenwasserstoffharzes mit einem OH-Gehalt von 3 % gemischt und abgekühlt.

Man erhält ein hellbraunes, flüssiges Produkt mit einer Viskosität von 8 600 mPa·s bei 25 °C.

Beispiel 2

Härterkomponente B

495 g eines handelsüblichen polyaminoimidazolinhaltigen Polyaminoamids, gemischt mit 55 g Tetraäthylenpentamin, mit einem Aminäquivalent der Mischung von 77 werden mit 150 g eines in 15 g Äthyl-hexylglycidyläther gelösten festen Bisphenol-A-Diglycidyläthers (Epoxidäquivalent der Lösung 190) während 2 h bei 80 °C unter Rühren umgesetzt.

Das erhaltene Addukt wird mit 5 g Essigsäure und 292 g eines phenolmodifizierten Cumaron-Inden- Harzes mit einem OH-Gehalt von 2,5 % gemischt und abgekühlt.

Die dunkelbraune Mischung mit einer Viskosität von 21 000 mPa·s bei 25 °C wird in 1 000 g Wasser unter Rühren emulgiert.

Beispiel 3

Anwendungsbeispiel

195 g der Härterkomponente A werden in 330 g Wasser eingerührt. Danach werden 250 g eines Epoxidharzes auf Bisphenol-A-Basis (Viskosität bei 25 °C 12 000 mPa·s, Epoxidäquivalent 190) zugegeben und durch intensives Rühren emulgiert.

Zu dieser Epoxidharzemulsion werden 5,0 kg Portlandzement PZ 35, 15,5 kg Normensand nach DIN 1164 und 1 450 g Wasser zugegeben und intensiv vermischt. (Wasser/Zement-Faktor : 0,36). Man erhält ein gut fließendes und pumpfähiges Material. Ausbreitmaß nach DIN 1164 160 mm, Dichte 2 270 kg/m³.

Mit dem so hergestellten Mörtel werden Probekörper (4 × 4 × 16 cm) hergestellt und der ausgehärtete vergütete Mörtel nach DIN 1164, Teil 7 auf Festigkeit geprüft.

| Ergebnisse nach | | 7 d | 28 d | 360 d |
|---|---|---|---|---|
| Biegezugfestigkeit | $(N/mm^2)$ | 8 | 14 | 17 |
| Druckfestigkeit | $(N/mm^2)$ | 45 | 67 | 103 |

Die Probekörper sind nahezu porenfrei.

Im Freilandversuch über 12 Monate erwiesen sich die verlegten Probeflächen, als frost- und tausalzbeständig.

Ebenfalls nach 12 Monaten kann mittels des Phenolphthalein-Tests keine Carbonatisierung nachgewiesen werden.

Beispiel 4

400 g der Härteremulsion gemäß Beispiel 2 werden mit 250 g eines Epoxidharzes auf Bisphenol-A- Basis (Viskosität bei 25 °C 12 000 mPa·s, Epoxidäquivalent 190) intensiv vermischt und emulgiert. Analog Beispiel 3 wird diese Emulsion mit 5,0 kg PZ 35, 15,5 kg Normensand und 1 600 g Wasser (Wasser/Zement-Faktor 0,360) vermischt und der hergestellte ausgehärtete Mörtel geprüft.

Man erhält ein gut fließendes und pumpfähiges Material.

Ausbreitmaß nach DIN 1164 : 170 mm

Dichte 2 285 kg/m³

6

Die Probekörper werden gemäß Beispiel 3 hergestellt und ausgeprüft :

| Ergebnisse nach | | 7 d | 28 d |
|---|---|---|---|
| Biegezugfestigkeit | $(N/mm^2)$ | 7 | 13 |
| Druckfestigkeit | $(N/mm^2)$ | 43 | 63 |

Die Probekörper sind nahezu porenfrei.

Im Freilandversuch über 12 Monate erwiesen sich die verlegten Probeflächen als frost- und tausalzbeständig.

Ebenfalls nach 12 Monaten kann mittels des Phenolphthalein-Tests keine Carbonatisierung nachgewiesen werden.

## Beispiel 5

Vergleichsbeispiel

Analog Beispiel 3 wurde eine Zementmörtelmischung ohne Epoxidharz und ohne Härter mit einem Wasserzementfaktor von 0,4 angesetzt.

Ausbreitmaß nach DIN 1164 185 mm

Dichte 2 310 kg/m³

Die Probekörper wurden gemäß Beispiel 3 hergestellt und ausgeprüft.

| Ergebnisse nach | | 7 d | 28 d | 360 d |
|---|---|---|---|---|
| Biegezugfestigkeit | $(N/mm^2)$ | 6 | 8 | 9,5 |
| Druckfestigkeit | $(N/mm^2)$ | 41 | 60 | 65 |

Die Carbonatisierungstiefe (Phenolphthalein-Test) betrug nach 12 Monaten 1,2 mm.

Ebenfalls nach 12 Monaten zeigten die Probekörper des Freilandversuchs deutliche Rißbildungen und Abplatzungen an der Oberfläche.

## Beispiel 6

Vergleichsbeispiel

Eine Mörtelmischung aus 250 g eines Epoxidharzes auf Bisphenol-A-Basis und 125 g eines Polyaminoamidhärters, 5 625 g Portlandzement PZ 35, 22 250 g Sand 0-4 mm und 2 063 g Wasser (Wasser/Zement-Faktor 0.367) wurde analog Beispiel 3 hergestellt und ausgeprüft :

Dichte 2 170 kg/m³

Ausbreitmaß nach DIN 1164 : 140 mm

| Ergebnisse nach | | 7 d | 28 d |
|---|---|---|---|
| Biegezugfestigkeit | $(N/mm^2)$ | 6 | 7 |
| Druckfestigkeit | $(N/mm^2)$ | 29 | 39 |

Die Carbonatisierungstiefe nach 12 Monaten betrug 2,5 mm (Phenolphthalein-Test).

Die Probekörper der Freilandlagerung zeigen leichte Rißbildungen an der Oberfläche und sind damit nicht zufriedenstellend.

**Patentansprüche**

1. Mit Wasser emulgierbare Epoxidharzsysteme bestehend aus einer flüssigen Epoxidharz- und einer Härterkomponente, dadurch gekennzeichnet, daß die Härterkomponente.

a) 65-99 Gew.-% eines Adduktes aus 35-94 Gew.-%, bezogen auf die Gesamthärterkomponente, Polyamin, Polyaminoimidazolin und/oder Polyaminoamid und 5-30 Gew.-%, bezogen auf die Gesamthärterkomponente, einer oder mehrerer Glycidylverbindungen

b) 0,1-5 Gew.-% einer oder mehrerer aliphatischer oder aromatischer Carbonsäuren und

c) 0,9-30 Gew.-% eines phenol-modifizierten aromatischen Kohlenwasserstoffharzes mit einem Gehalt an OH-Gruppen von 0,9-6 % enthält und daraus hergestellte wäßrige Emulsionen.

2. Mit Wasser emulgierbare Epoxidharzsysteme nach Anspruch 1, dadurch gekennzeichnet, daß das phenolmodifizierte aromatische Kohlenwasserstoffharz vorzugsweise einen OH-Gehalt von 1,5-3 Gew.-% hat.

3. Mit wasser emulgierbare Epoxidharzsysteme nach Anspruch 1, dadurch gekennzeichnet, daß die Härterkomponente in Wasser gelöst oder emulgiert ist.

4. Verfahren zur Herstellung der Härterkomponente des mit Wasser emulgierbaren Epoxidharzsystems nach Anspruch 1 und 2, dadurch gekennzeichnet, daß 35-94 Gew.-% Polyamin, Polyaminoimidazolin und/oder Polyaminoamid und 5-30 Gew.-% Diglycidylverbindung bei Temperaturen im Bereich von 60 bis 100 °C während mehrerer Stunden zur Reaktion gebracht werden und das entstandene Addukt mit 0,1-5 Gew.-% Carbonsäure und 0,9-30 Gew.-% eines phenol-modifizierten, aromatischen Kohlenwasserstoffharzes mit einem Gehalt an OH-Gruppen von 0,9-6 % gemischt wird.

5. Verwendung der mit Wasser emulgierbaren Epoxidharzsysteme und der daraus hergestellten wäßrigen Emulsionen nach den Ansprüchen 1 bis 3 zur Vergütung von hydraulischen Bindemitteln.

6. Verwendung der mit Wasser emulgierbaren Epoxidharzsysteme und der daraus hergestellten wäßrigen Emulsionen nach den Ansprüchen 1-3 in Kombination mit hydraulischen Bindemitteln, Füll- und/oder Zuschlagstoffen zur Innen- und Außenbeschichtung von Metallrohren.

7. Verwendung der mit Wasser emulgierbaren Epoxidharzsysteme und der daraus hergestellten wäßrigen Emulsionen nach den Ansprüchen 1-3 in Kombination mit hydraulischen Bindemitteln, Füll- und/oder Zuschlagstoffen zur Herstellung von halbstarren Belägen.

8. Verwendung der mit Wasser emulgierbaren Epoxidharzsysteme und der daraus hergestellten wäßrigen Emulsionen nach den Ansprüchen 1-3 in Kombination mit hydraulischen Bindemitteln, Füll- und/oder Zuschlagstoffen zur Herstellung von Einpressmörteln.

9. Verwendung der mit Wasser emulgierbaren Epoxidharzsysteme und der daraus hergestellten wäßrigen Emulsionen nach den Ansprüchen 1-3 in Kombination mit hydraulischen Bindemitteln, Füll- und/oder Zuschlagstoffen zur Herstellung von Gebirgsankern.

**Claims**

1. An epoxy resin system which is emulsifiable with water consisting of a liquid epoxy resin and a hardener composition and aqueous emulsions made therefrom, characterized in that the hardener composition consists of

a) 65 to 99 % by weight of an adduct of 35 to 94 % by weight, based on the complete hardener composition, of a polyamine, polyaminoimidazoline and/or polyaminoamide and 5 to 30 % by weight, based on the complete hardener composition of one or several glycidyl compounds.

b) 0.1 to 5 % by weight of one or several aliphatic or aromatic carboxylic acids.

c) 0.9 to 30 % by weight of a phenol-modified aromatic hydrocarbon resin with a hydroxyl content of 0.9 to 6 %.

2. A water emulsifiable epoxy resin system of claim 1, characterized in that the phenol-modified aromatic hydrocarbon resin has a hydroxyl content of 1.5 to 3 % by weight.

3. A water emulsifiable epoxy resin system of claim 1 wherein the hardener composition is solved or emulsified in water.

4. A process for the preparation of the hardener composition of the epoxy resin system of claims 1 and 2 comprising reacting a mixture of 5 to 30 % by weight of at least one glycidyl compound and 35 to 94 % by weight of at least one member of the group consisting of polyamines, polyaminoimidazolines and polyaminoamides at 60 to 100 °C for several hours and admixing the formed adduct with 0.1 to 5 % by weight of at least one aliphatic or aromatic carboxylic acid and 0.9 to 30 % by weight of a phenol-modified aromatic hydrocarbon resin with a hydroxyl content of 0.9 to 6 %.

5. Use of the water emulsifiable epoxy resin system and of the aqueous emulsion made therefrom of claims 1 to 3 for the improvement of hydraulic binders.

6. Use of the water emulsifiable epoxy resin system and of the aqueous emulsion made therefrom of claims 1 to 3 in combination with hydraulic binders, fillers and/or aggregate materials for the internal and external coating of metal pipes.

7. Use of the water emulsifiable epoxy resin system and of the aqueous emulsion made therefrom of claims 1 to 3 in combination with hydraulic binders, fillers and/or aggregate materials for the preparation of semirigid road surfaces.

8. Use of the water emulsifiable epoxy resin system and of the aqueous emulsion made therefrom of claims 1 to 3 in combination with hydraulic binders, fillers and/or aggregate materials for the preparation of injection mortar compositions.

9. Use of the water emulsifiable epoxy resin system and of the aqueous emulsion made therefrom of claims 1 to 3 in combination with hydraulic binders, fillers and/or aggregate materials for the preparation of rock anchors.

**Revendications**

1. Systèmes de résines époxydes émulsifiables avec l'eau, constitués d'une résine époxyde fluide et d'un composé durcissant, caractérisés en ce que le composé durcissant contient :

a) 65-99 % en poids d'un composé d'addition constitué de 35-94 % en poids, rapporté sur la totalité du composé durcissant, de polyamine, de polyaminoimidazoline et/ou de polyaminoamide et de 5-30 % en poids, rapporté sur la totalité du composé durcissant, d'un ou plusieurs composés glycidyliques,

b) 0,1-5 % en poids d'un ou plusieurs acides carboxyliques aliphatiques ou aromatiques et

c) 0,9-30 % en poids d'une résine hydrocarbonée aromatique, modifiée par du phénol, avec une teneur en groupes OH- de 0,9-6 %, et les émulsions aqueuses préparées à partir de ces systèmes.

2. Systèmes de résines époxydes émulsifiables avec l'eau selon la revendication 1, caractérisés en ce que la résine hydrocarbonée aromatique, modifiée par du phénol, présente une teneur en groupes OH- de préférence de 1,5 à 3 % en poids.

3. Systèmes de résines époxydes émulsifiables avec l'eau selon la revendication 1, caractérisés en ce que le composé durcissant est émulsifié ou dissous dans l'eau.

4. Procédé de fabrication du composé durcissant du système de résines époxydes émulsifiables avec l'eau, selon la revendication 1 ou 2, caractérisé en ce que 35 à 94 % en poids de polyamine, de polyaminoimidazoline et/ou de polyaminoamide et 5 à 30 % en poids de composé diglycidyle sont mis à réagir pendant plusieurs heures à une température de 60 à 100 °C, et en ce que le composé d'addition résultant est mélangé avec 0,1 à 5 % en poids d'acide carboxylique et avec 0,9 à 30 % en poids d'une résine hydrocarbonée aromatique, phénol-modifiée, avec une teneur en groupes OH- de 0,9 à 6 %.

5. Application des systèmes de résines époxydes émulsifiables avec l'eau et des émulsions aqueuses fabriquées à partir de celles-ci, selon les revendications 1 à 3, à l'amélioration des agents liants hydrauliques.

6. Application des systèmes de résines époxydes émulsifiables avec l'eau et des émulsions aqueuses fabriquées à partir de celles-ci, selon les revendications 1 à 3, en combinaison avec des agents liants hydrauliques, des agents de charge et/ou des agents supplémentaires au revêtement extérieur ou intérieur des tuyaux métalliques.

7. Application des systèmes de résines époxydes émulsifiables avec l'eau et des émulsions aqueuses fabriquées à partir de celles-ci, selon les revendications 1 à 3, en combinaison avec des agents liants hydrauliques, des agents de charge et/ou des agents supplémentaires à la fabrication de revêtements semi-rigides.

8. Application des systèmes de résines époxydes émulsifiables avec l'eau et des émulsions aqueuses fabriquées à partir de celles-ci selon les revendications 1 à 3, en combinaison avec des agents liants hydrauliques, des agents de charge et/ou des agents supplémentaires à la fabrication de mortiers compressés.

9. Application des systèmes de résines époxydes émulsifiables avec l'eau et des émulsions aqueuses fabriquées à partir de celles-ci, selon les revendications 1 à 3, en combinaison avec des agents liants hydrauliques, des agents de charge et/ou des agents supplémentaires à la fabrication d'armatures de montagne.